**Europäisches Patentamt**

**European Patent Office**

**Office européen des brevets**

(19)

(11) Veröffentlichungsnummer: **0 389 004**

**A2**

(12) **EUROPÄISCHE PATENTANMELDUNG**

(21) Anmeldenummer: **90109752.7**

(22) Anmeldetag: **15.03.88**

(51) Int. Cl.⁵: **A01C 7/10**

Diese Anmeldung ist am 22 - 05 - 1990 als Teilanmeldung zu der unter INID-Kode 60 erwähnten Anmeldung eingereicht worden.

(30) Priorität: **25.03.87 DE 3709526**

(43) Veröffentlichungstag der Anmeldung:
**26.09.90 Patentblatt 90/39**

(60) Veröffentlichungsnummer der früheren Anmeldung nach Art. 76 EPÜ: **0 284 870**

(84) Benannte Vertragsstaaten:
**DE FR GB IT NL**

(71) Anmelder: **Amazonen-Werke H. Dreyer GmbH & Co. KG**
**Am Amazonenwerk 9-13**
**D-4507 Hasbergen-Gaste(DE)**

(72) Erfinder: **Gattermann, Bernd**
**Eichenwall 3**
**D-2872 Hude 1(DE)**
Erfinder: **Siefken, Claus**
**Bookhorn 29**
**D-2875 Ganderkesee 1(DE)**
Erfinder: **Feldhaus, Werner**
**Huntloser Strasse 25**
**D-2879 Gevershausen(DE)**

(54) **Verteilmaschine.**

(57) Verteilmaschine, insbesondere Sämaschine, mit einem Vorratsbehälter und Dosierorganen, wobei die Dosierorgane von auf dem Boden abrollenden Rädern, Walzen und dgl. über einen Antrieb angetrieben werden. Um bei Verteilmaschinen mit "Bodenradantrieb" eine sofortige Unterbrechung des Ausbringens von Material am Ende einer Ausbringbahn zu gewährleisten, ist vorgesehen, daß in dem Antrieb der Dosierorgane der Verteilmaschine eine schaltbare Kupplung (32) angeordnet ist, daß die Kupplung (32) eine Betätigungsvorrichtung aufweist, mit der die Kupplung (32) auskuppelbar und einkuppelbar ist.

## Verteilmaschine

Die Erfindung betrifft eine Verteilmaschine gemäß des Oberbegriffes des Anspruches.

Durch das deutsche Gebrauchsmuster 74 34 244 ist eine Verteilmaschine mit einer Bremsvorrichtung für die Walze bekannt. Diese Bremsvorrichtung wird erst durch eine Relativbewegung zwischen der Walze und einem Nachlaufgerät wirksam, so daß beim Ausheben nicht sofort die Drehbewegung der Walze beendet wird. Es wird also nicht sofort das Ausbringen von Saatgut bei Begrinn des Aushebens beendet. Weiterhin ist nachteilig, daß nur bei einem entsprechend hohem Ausheben die Bremvorrichtung wirksam wird, d.h. daß Nachlaufgerät muß vom Boden freikommen.

Wenn diese Verteilmaschine, die über Dreipunktkupplungselemente an den Dreipunktkraftheber eines Schleppers angekuppelt ist, am Feldende nach einer Ausbringüberfahrt nicht hoch genug ausgehoben wird, drehen sich die Walzenelemente aufgrund ihrer Trägheit noch weiter, so daß die Dosierorgane den Ausbringelementen weiterhin Material zuführen. Hierdurch wird am Feldende beim Wenden sehr viel Material jeweils einfach vergeudet. Dieses Problem tritt nicht nur bei Verteilmaschinen auf, deren Fahrwerk als Walzenkörper ausgebildet ist, sondern auch bei Maschinen, deren Dosierorgane von Laufrädern angetrieben werden. Vermehrt werden die sich die in neuerer Zeit immer größer und breiter werdende Räder verwendet, großen Trägeheitskräfte dieser großen Räder beim Abheben vom Boden, ohne daß die Vorwärtsbewegung vor dem Ausheben der Maschine unterbrochen ist, weiterdrehen, so daß noch weiter Material ausgebracht wird.

Das bedeutet also, daß diese geschilderte Problematik bei allen Verteilmaschinen, deren Dosierorgane von auf dem Boden abrollenden Antriebsrädern angetrieben werden, besteht. Diese auf dem Boden abrollenden Antriebsräder können als Laufräder, Grummireifen, Walzen verschiedenster Ausführung etc. ausgebildet werden. Dies bedeutet also, daß die Erfindung sich mit Verteilmaschinen beschäftigt, deren Dosierorgane einen "Bodenradantrieb" aufweisen.

Der Erfindung liegt die Aufgabe zugrunde, bei Verteilmaschinen mit "Bodenradantrieb" eine sofortige Unterbrechung des Ausbringens von Material am Ende einer Ausbringbahn zu gewährleisten.

Diese Aufgabe wird erfindungsgemäß durch das Kennzeichen des Ansprüches gelöst.

Infolge dieser Maßnahmen läßt sich am Ende einer Ausbringbahn, die Kupplung zwischen den Dosierorganen und dem Antrieb der Dosierorgane unterbrechen sowie zu Beginn der Ausbringbahn wird über die Kupplung der Antrieb der Dosierorgane wieder hergestellt, denn beim Ausheben der Verteilmaschine wird die Kupplung ausgekuppelt und beim Absenken der Verteilmaschine wird die Kupplung eingekuppelt. Somit werden die Dosierorgane nicht weiter angetrieben, so daß kein Material mehr ausgebracht wird. Hierbei kann diese Kupplung von Hand schaltbar sein oder aber mit den Aushebevorrichtungen der Sämaschine oder den Aushebevorrichtungen der Laufräder oder Walze vom Boden gekoppelt sein, so daß die Kupplung automatisch beim Ausheben der Sämaschine bzw. beim Abheben der Säschare vom Boden automatisch abgeschaltet wird. Diese Kupplung kann entweder als elektrisch oder hydraulisch schaltbare Kupplung ausgebildet sein. Als Kupplung eignen sich beispielsweise Klauenkupplung, Schlingfederkupplungen etc.

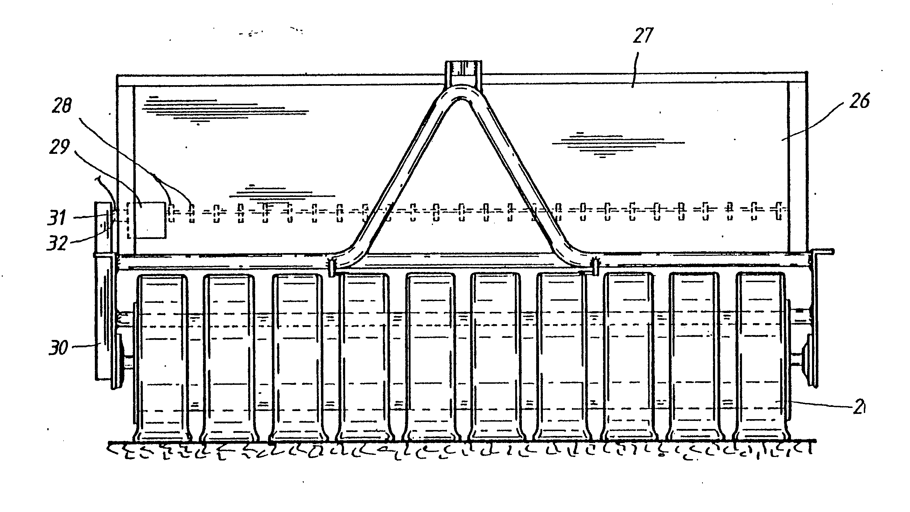

Die weiteren Einzelheiten der Erfindung sind der Beispielsbeschreibung und der Zeichnung zu entnehmen. Hierbei zeigt die Zeichnung eine erfindungsgemäß ausgebildete Sämaschine in der Ansicht von vorne.

Die Sämaschine 26, ist auf einer Nachlaufwalze 2 aufgesattelt. Diese Sämaschine weist Dosierorgane auf, die das im Vorratsbehälter 27 der Sämaschine 26 befindliche Saatgut den nicht dargestellten Säscharen zuführen. Die Dosierorgane 28, die mit gestrichelten Linien dargestellt sind, werden über das Regelgetriebe 29 und dem Antriebsmechanismus 30 von der Nachlaufwalze 2 angetrieben, wenn diese von dem Boden abrollen. Zwischen den Antriebsmechanismus 30 und der Eingangswelle 31 des Regelgetriebes 29 ist die schaltbare Kupplung 32 angeordnet. Diese schaltbare Kupplung 32 weist eine Betätigungsvorrichtung auf, über die beim Ausheben der Sämaschine 26 die Kupplung 32 auskuppelbar und beim und beim Absenken der Verteilmaschine die Kupplung einkuppelbar ist. Diese Betätigungsvorrichtung kann von Hand schaltbar sein. In bevorzugter Weise sind an der Aushebevorrichtung der Sämaschine 26 jedoch Schaltglieder, entweder in elektrischer oder hydraulischer Ausführung angeordnet, über welche dann über eine Verbindungsleitung die Kupplung 32 automatisch beim Ausheben der Sämaschine, d.h. beim Abheben der Nachlaufwalze 2 vom Boden der Antrieb automatisch unterbrochen wird und beim Absenken der Sämaschine auf den Boden, so daß die Nachlaufwalze 2 auf dem Boden abrollt, bei Beginn des Ausbringvorganges wieder eingekuppelt wird.

**Ansprüche**

1. Verteilmaschine, insbesondere Sämaschine, mit einem Vorratsbehälter (27) und Dosierorganen (28) , wobei die Dosierorgane von auf dem Boden abrollenden Rädern, Walzen und dgl. (2) über einen Antrieb (30) angetrieben werden, dadurch gekennzeichnet, daß in dem Antrieb (30) der Dosierorgane der Verteilmaschine eine schaltbare Kupplung (32) angeordnet ist, daß die Kupplung (32) eine Betätigungsvorrichtung aufweist, mit der die Kupplung (32) auskuppelbar und einkuppelbar ist.

EP 0 389 004 A2